Europäisches Patentamt

European Patent Office

Office européen des brevets

(11) Veröffentlichungsnummer: **0 172 316**
**A2**

# EUROPÄISCHE PATENTANMELDUNG

(21) Anmeldenummer: 85105073.2

(22) Anmeldetag: 26.04.85

(51) Int. Cl.⁴: **F 16 K 5/22**
**F 16 K 5/02**

(30) Priorität: 16.08.84 DE 8424185 U

(43) Veröffentlichungstag der Anmeldung:
26.02.86 Patentblatt 86/9

(84) Benannte Vertragsstaaten:
BE FR GB

(71) Anmelder: Dr. C. Otto & Comp. Gesellschaft mit
beschränkter Haftung
Christstrasse 9 Postfach 10 18 50
D-4630 Bochum 1(DE)

(72) Erfinder: Halbherr, Gerd
Cruismannstrasse 52c
D-4630 Bochum 1(DE)

(74) Vertreter: Finkener und Ernesti Patentanwälte
Heinrich-König-Strasse 119
D-4630 Bochum 1(DE)

(54) Umstellhahn.

(57) Umstellhahn für die Zufuhr von Heizgas für mit Zugwechsel betriebene Regenerativ-Koksöfen, bestehend aus einem in einem Hahngehäuse drehbaren konischen Hahnküken. Zur Erzielung einer selbsttätigen und ständigen Schmierung ist vorgesehen, daß auf der Oberfläche des Hahnkükens (2) vier gleichmäßig auf dessen Umfang verteilte, in Längsrichtung verlaufende Schmiernuten (17) vorgesehen sind, daß das Hahngehäuse (1) mit zwei sich diametral gegenüberliegenden Schmiereinrichtungen (18) versehen ist, die in der Offenstellung des Hahns im Bereich von zwei sich diametral gegenüberliegenden Schmiernuten (17) und in der geschlossenen Stellung im Bereich der beiden anderen sich gegenüberliegenden Schmiernuten (17) liegen und daß in der Nähe der Enden des Gehäuses auf dessen Gleitfläche je eine umlaufende Ringnut (20,21) angebracht ist, die vier gleichmäßig auf den Umfang des Gehäuses verteilt angeordnete Taschen (22) enthält, die sich in entgegengesetzter Richtung der benachbarten Stirnflächen erstrecken und in deren Bereich in beiden Endstellungen des Hahnkükens die Schmiernutem (17) enden.

./...

EP 0 172 316 A2

Fig. 1

Die Erfindung bezieht sich auf einen Umstellhahn für die Zufuhr von Heizgas für mit Zugwechsel betriebene Regenerativ-Koksöfen, bei denen in bestimmten Zeitabständen von z.B. 20 bis 30 Minuten eine Umstellung der Heizgashähne vorgenommen wird, bestehend aus einem konischen Hahnküken, das unter Freilassen eines einstellbaren Spaltes in einem Hahngehäuse drehbar ist, wobei das Hahnküken eine I-Bohrung besitzt, über die in der Offenstellung der Gasdurchtritt erfolgt, während in einer um 90° gedrehten Stellung die Gaszufuhr abgesperrt ist und wobei das Hahnküken mit in Längsrichtung verlaufenden Schmiernuten versehen ist, die nicht bis zu den Stirnflächen des Hahnkükens durchgeführt sind.

Derartige Umstellhähne, bei denen das Hahnküken mit Hilfe von Einstellmuttern und einem Drucklager in einer genau festgelegten Position gehalten wird, haben gegenüber solchen, ebenfalls zum Stande der Technik gehörenden Umstellhähnen, bei denen das Küken über eine Feder in das Hahngehäuse gezogen wird, den Vorteil, daß der Spalt für die Schmierfilmdicke entsprechend der verwendeten Fettsorte und der geforderten Dichtigkeit der Hähne exakt mittels eines Spions einstellbar ist. Es besteht auch nicht die Gefahr, daß der Schmierfilm durch die auf das Küken wirkende Federkraft während der Umstellungen weggequetscht wird, so daß der Schmierfilm erhalten bleibt. Gasaustritte in die Atmosphäre werden bei den Umstellhähnen dadurch vermieden, daß sie an beiden Enden mit Gehäusedeckeln versehen werden.

Der Erfindung liegt die Aufgabe zugrunde, die Schmierung des Hahnkükens so auszubilden, daß die gesamte Gleitfläche zwischen dem Hahnküken und der Innenwandung des Gehäuses selbsttätig und ständig mit Schmierfett versorgt wird.

Ausgehend von einem Umstellhahn der eingangs beschriebenen Art besteht die Erfindung darin, daß auf der Oberfläche des Hahnkükens vier gleichmäßig auf dessen Umfang verteilte, in Längsrichtung verlaufende Schmiernuten vorgesehen sind, daß das Hahngehäuse mit zwei sich
diametral gegenüberliegenden Schmiereinrichtungen versehen ist, die in der Offenstellung des Hahns im Bereich von zwei sich diametral gegenüberliegenden Schmiernuten und in der geschlossenen Stellung im Bereich der
beiden anderen sich gegenüberliegenden Schmiernuten liegen und daß in der Nähe der Enden des Gehäuses auf dessen
Gleitfläche je eine umlaufende Ringnut angebracht ist,
die vier gleichmäßig auf den Umfang des Gehäuses verteilt angeordnete Taschen enthält, die sich in entgegengesetzter Richtung der benachbarten Stirnflächen erstrecken
und in deren Bereich in beiden Endstellungen des Hahnkükens die Schmiernuten enden.

Es hat sich als zweckmäßig erwiesen, die Schmiereinrichtungen an zwei sich diametral gegenüberliegenden Stellen
im Bereich der waagerechten Mittelebene des Umstellhahns
anzuordnen. Ferner sieht die Erfindung vor, das Hahngehäuse im Bereich der Mündungen der Öffnungen der Schmiermitteleinrichtungen mit einer Ausnehmung zu versehen.

Durch die erfindungsgemäße Anordnung der Taschen, die mit
den in der Nähe der Enden des Gehäuses vorgesehenen Ringnuten und in den Endstellungen des Umstellhahns mit den
Längsnuten des Hahnkükens in Verbindung stehen, wird erreicht, daß die Vorspannung des Fettes in den Ringnuten
erhalten bleibt, wenn die Längsschmiernuten über die
Durchtrittsöffnungen des Gehäuses gleiten. Die Längsnuten
des Hahnkükens werden nur in den beiden Endstellungen
mit Schmierfett versorgt. Unmittelbar nach Beginn einer
Drehbewegung des Kükens wird die Verbindung der Schmiertaschen mit den Längsnuten unterbrochen, so daß die Vor-

spannung des Schmierfettes in den abgesperrten Ringnuten erhalten bleibt. Das in den Längsnuten befindliche
Schmierfett gewährleistet während der Drehbewegung die
Aufrechterhaltung eines Schmierfilmes, dessen Dicke
unter anderem von der Stellung des Hahnkükens in bezug
auf das Hahngehäuse abhängt, die mit Hilfe von Einstellmuttern einregulierbar ist.

Auf der Zeichnung ist ein Ausführungsbeispiel der Erfindung dargestellt. Es zeigen:

Figur 1    einen mittleren Längsschnitt durch einen Umstellhahn gemäß der Erfindung und

Figur 2    einen Schnitt gemäß der Linie C-D der Figur 1.

Der Umstellhahn besteht aus einem Gehäuse 1 mit einer
konischen Sitzfläche und dem dazu passenden kegelstumpfförmigen Küken 2, dessen Betätigungszapfen 3 dicht durch
einen abnehmbaren Deckel 4 geführt ist. Die Durchführung
des Zapfens 3 durch den Deckel ist mit einem Simmerring
5 abgedichtet. Das äußere Ende des Zapfens ist mit dem
Gestänge 6 einer Umstelleinrichtung verbunden, mit der
das Küken in bestimmten Zeitabständen um 90° gedreht
werden kann. An dem entgegengesetzten Ende ist das Gehäuse 1 ebenfalls mit einem abnehmbaren Deckel 7 verschlossen. Das Hahnküken 2 ist mittels eines Drucklagers
und Einstellmuttern so gelagert, daß es unter Bildung
eines Spaltes zwischen seiner Oberfläche und den Gleitflächen des Gehäuses in einer genau festgelegten Position
gehalten wird. Mit 8 ist das als Kugellager ausgebildete
Drucklager bezeichnet; die beiden Einstellmuttern 9 sind
auf einem an dem Küken befestigten Zapfen 10 aufschraubbar. Das Kugellager stützt sich an einer Ringscheibe 11
ab, die in einem Ansatz 12 an dem Gehäuse anliegt. Auf
diese Weise kann durch Ein- oder Herausschrauben der

Einstellmuttern die Lage des Kükens zum Gehäuse und damit die Größe des Spaltes an den Gleitflächen eingestellt werden.

Das Gehäuse ist mit zwei sich gegenüberliegenden Anschlußstutzen 13 und 14 für die auf der Zeichnung nicht dargestellte ankommende bzw. abgehende Gasleitung versehen. Mit den inneren Öffnungen dieser Stutzen fluchten zwei in der Wandung des Kükens vorgesehene Durchtrittsöffnungen 15 und 16, wenn der Hahn in der Offenstellung ist.

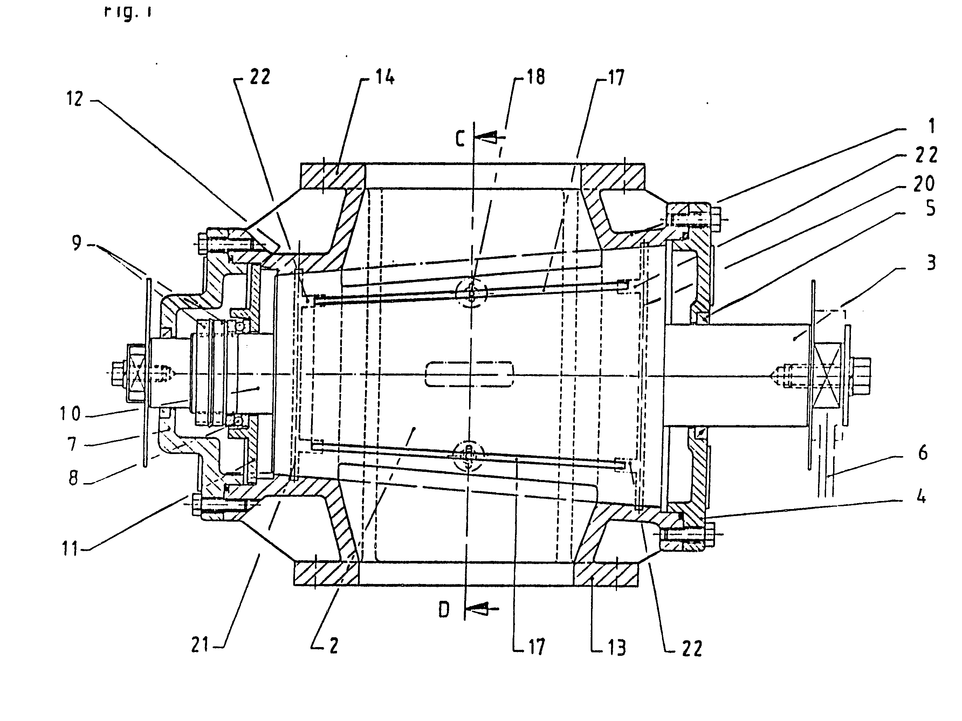

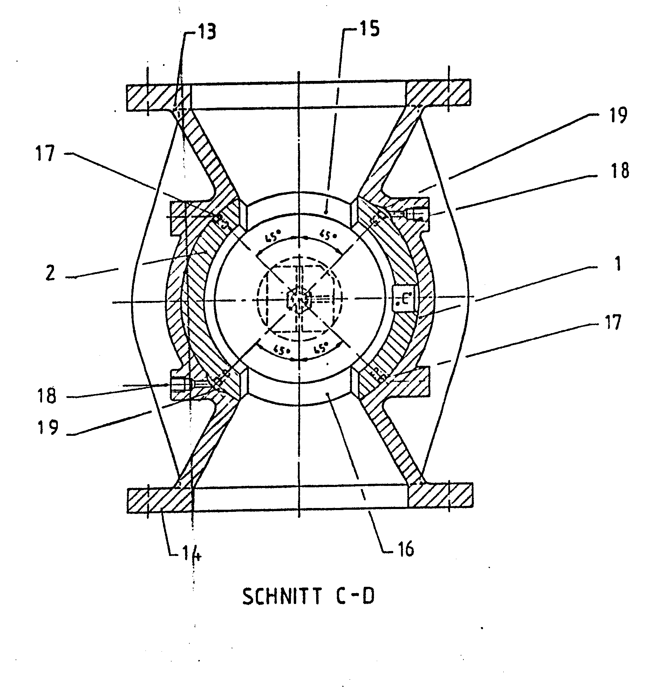

Wie sich aus der Zeichnung ergibt, sind auf der Außenfläche des Kükens vier Längsnuten 17 vorgesehen, die als Sacknuten ausgebildet, d.h. nicht bis zu den Stirnflächen des Kükens durchgeführt sind. Die Längsnuten sind gleichmäßig über den Umfang der Gleitfläche des Kükens verteilt; sie haben einen Winkelabstand von 90° voneinander. Das Gehäuse 1 enthält zwei sich diametral gegenüberliegende Schmiereinrichtungen 18, bei denen es sich um Schmiernippel oder um Anschlüsse an eine Zentralschmierung handeln kann. Die Schmiereinrichtungen liegen bei dem dargestellten Ausführungsbeispiel, wie sich aus Figur 1 ergibt, in der waagerechten Mittelebene des Umstellhahns und, wie sich aus Figur 2 ergibt, an zwei sich gegenüberliegenden Längsnuten 17, wenn sich das Küken in einer der Endstellungen befindet. Im Bereich des Austrittes der Öffnung der Schmiereinrichtung ist die Innenfläche des Gehäuses mit einer Ausnehmung 19 versehen.

In der Nähe der Enden des Gehäuses ist in dessen Innenwandung ferner je eine geschlossene Ringnut 20 bzw. 21 angebracht. Die Ringnuten enthalten jeweils vier Taschen 22, die sich in entgegengesetzter Richtung der Stirnwände des Gehäuses erstrecken und an den Stellen angeordnet sind, an denen sich die Längsnuten 17 befinden,
wenn das Küken sich in der einen oder anderen Endstellung
befindet. Im Bereich dieser Taschen 22 enden die Längsnuten. Die Taschen sind vorzugsweise etwas breiter als
die Längsnuten ausgebildet.

Die Vorrichtung arbeitet wie folgt:
Die auf der Zeichnung dargestellte Stellung ist die Offenstellung, d.h. die Durchgangsöffnungen 15 und 16 des Hahnkükens fluchten mit den beiden Stutzen. In dieser Stellung kann das Heizgas durch den Umstellhahn strömen. Dabei stehen, wie Figur 2 zeigt, zwei sich gegenüberliegende Längsnuten 17 des Kükens mit den beiden Schmiereinrichtungen 18 in Verbindung, so daß Schmiermittel in
diese Längsnuten eintreten kann. Gleichzeitig besteht
zwischen diesen Längsnuten und den beiden Ringnuten 20
und 21 eine Verbindung über je zwei Taschen 22, so daß
das Schmiermittel sich auch in die Ringnuten drücken kann.
Bei einer Drehung des Hahnkükens um 90°, in der die Durchgangsöffnungen verschlossen sind, verteilt sich das
Schmiermittel gleichmäßig auf die Gleitflächen zwischen
Hahnküken und Gehäuse. In dieser Endstellung stehen die
beiden anderen Längsnuten 17 mit den Schmiereinrichtungen
in Verbindung,so daß sich das Schmiermittel in entsprechender Weise über diese Längsnuten und die damit in Verbindung stehenden Taschen in den oberen und unteren Ringraum drückt. Auf diese Weise ist eine selbsttätige und
gleichmäßige Schmierung des Umstellhahnes sichergestellt.

Das Hahnküken kann in einer der geschlossenen Wandungen
eine weitere Durchtrittsöffnung enthalten, die auf der
Zeichnung angedeutet und mit dem Bezugszeichen 23 versehen ist. Sie ist in einem Winkel von 90° zu den Durchtrittsöffnungen 15 und 16 angeordnet. In diesem Fall wird
das Gehäuse mit einem weiteren, nicht dargestellten Stutzen versehen, an den eine Leitung zur Zufuhr von Entgraphitierungsluft anschließbar ist. Auf diese Weise besteht die Möglichkeit, in die Gasleitungen Entgraphitierungsluft einzuführen, wenn sich der Umstellhahn in einer Stellung befindet, in der die Öffnung 23 des Hahnkükens mit der Öffnung des dritten Stutzens fluchtet, wobei der Umstellhahn in der Offenstellung ist. Durch eine Drehung des Kükens um 180° kann die Zufuhr der Entgraphitierungsluft abgestellt werden.

Finkener und Ernesti
Patentanwälte
Heinrich-König-Str. 119
D-4630 Bochum 1

14/84
EEF/US

Umstellhahn

Ansprüche

1. Umstellhahn für die Zufuhr von Heizgas für mit Zugwechsel betriebene Regenerativ-Koksöfen, bei denen in bestimmten Zeitabständen von z.B. 20 bis 30 Minuten eine Umstellung der Heizgashähne vorgenommen wird, bestehend aus einem konischen Hahnküken, das unter Freilassen eines einstellbaren Spaltes in einem Hahngehäuse drehbar ist, wobei das Hahnküken eine I-Bohrung besitzt, über die in der Offenstellung der Gasdurchtritt erfolgt, während in einer um 90° gedrehten Stellung die Gaszufuhr abgesperrt ist und wobei das Hahnküken mit in Längsrichtung verlaufenden Schmiernuten versehen ist, die nicht bis zu den Stirnflächen des Hahnkükens durchgeführt sind, d a - d u r c h   g e k e n n z e i c h n e t , daß auf der Oberfläche des Hahnkükens (2) vier gleichmäßig auf dessen Umfang verteilte, in Längsrichtung verlaufende Schmiernuten (17) vorgesehen sind, daß das Hahngehäuse (1) mit zwei sich diametral gegenüberliegenden Schmiereinrichtungen (18) versehen ist, die in der Offenstellung des Hahns im Bereich von zwei sich diametral gegenüberliegenden Schmiernuten (17) und in der geschlossenen Stellung im Bereich der beiden anderen sich gegenüberliegenden Schmiernuten (17) liegen und daß in der Nähe der Enden des Gehäuses auf dessen Gleitfläche je eine umlaufende Ringnut (20, 21) angebracht ist, die vier gleichmäßig auf den Umfang des Gehäuses verteilt angeordnete Taschen (22) enthält, die sich in entgegengesetzter Richtung der benachbarten Stirnflächen erstrecken und in deren Bereich in beiden Endstellungen des Hahnkükens die Schmiernuten (17) enden.

2. Umstellhahn nach Anspruch 1, dadurch gekennzeichnet, daß die Schmiereinrichtungen (18) an zwei sich diametral gegenüberliegenden Stellen im Bereich der waagerechten Mittelebene des Umstellhahns angeordnet sind.

3. Umstellhahn nach den Ansprüchen 1 und 2, dadurch gekennzeichnet, daß das Hahngehäuse im Bereich der Mündungen der Öffnungen der Schmiereinrichtungen (18) mit einer Ausnehmung (19) versehen ist.

Fig. 1

0172316

SCHNITT C-D